# EUROPEAN PATENT SPECIFICATION

(11) **EP 2 202 966 B1**
(45) Date of publication and mention of the grant of the patent: **31.08.2011**
(21) Application number: 10003167.3
(22) Date of filing: 07.04.2004
(51) Int. Cl.: H04N 5/45, G06F 3/14

(54) **Apparatus and method for performing PIP in display device**
Vorrichtung und Verfahren für Bild-in-Bild-Darstellung
Dispositif et méthode pour réaliser la fonctionnalité d'image-en-image de télévision

(30) Priority: 11.04.2003 KR 20030023014
(43) Date of publication of application: 30.06.2010
(62) Divisional of application: 04008472.5
(73) Proprietor: LG Electronics Inc., Yeongdeungpo-gu Seoul 150-010 (KR)
(72) Inventor: Kim, Joo Won, Seoul 150-010 (KR)
(74) Representative: Diehl & Partner GbR

(56) References cited:
- EP-A- 1 089 561
- WO-A-02/25940
- WO-A2-02/49351
- DE-A1- 4 416 249
- DE-A1- 19 905 109
- DE-C1- 19 909 756
- US-A- 4 949 179
- US-A1- 2002 140 861

## Description

### CROSS-REFERENCE TO RELATED APPLICATIONS

This application claims the benefit of Korean Application No. P2003-023014, filed on April 11, 2003.

### BACKGROUND OF THE INVENTION

### Field of the Invention

The present invention relates to a display device, and more particularly, to an apparatus and method for performing a picture-in-picture (PIP) in a display device. Although the present invention is suitable for a wide scope of applications, it is particularly suitable for a sub-picture (or PIP) having a shape and size adjustable to a user's preference.

### Discussion of the Related Art

As television broadcasting services have changed from the analog mode to the digital mode, the technologies in televisions have been greatly improved and developed both in quality and quantity. More specifically, the digital mode can operate a larger number of channels as compared to the analog mode, thereby providing an increased number of channels for television broadcasting. Also, the digital mode television provides the users with high resolution images of high definition (HD) quality.

Recently, in order to meet with the demands of the users, household television receivers have become slimmer for space efficiency, and the television screen has become wider for an increased real-life vision. In addition, digital televisions are currently being developed so that a plurality of other input signals other than broadcast signals, such as personal computers, can be displayed simultaneously. For example, a picture-in-picture (PIP) function is applied and used. Generally, the picture-in-picture (PIP) function refers to a sub-picture being displayed over a main picture on the screen. Herein, the sub-picture may either be a reduced version of the main picture displayed in a smaller frame or a completely different picture from another channel displayed in a smaller frame.

However, in the related art display device, only a sub-picture (or PIP) having a predetermined shape and size is provided, and the position of the sub-picture (or PIP) cannot be changed or moved. Further, reference is made to US 2002/140861, WO 02/25940, US 4949179, and EP 1089561, whereof a detailed discussion can be found in parent European Patent Application 04 008 472.

### SUMMARY OF THE INTENTION

Accordingly, the present invention is directed to an apparatus and method for performing PIP in a display device that substantially obviates one or more problems due to limitations and disadvantages of the related art. This object is solved by the apparatus of independent claim 1 and the method of independent claim 11. Further advantageous features, aspects, and details of the invention are evident from the dependent claims. The claims are a first non-limiting approach to defining the invention in general terms.

An aspect of the present invention is to provide an apparatus and method for performing PIP in a display device that displays PIP having a shape and size adjustable to a user's preference.

Additional advantages, aspects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these aspects and other advantages and in accordance with the purpose of the invention, as embodied and broadly described herein, an apparatus for performing PIP in a display device includes a first video processor converting a first video signal into data representing a displayable main picture, a second video processor converting a second video signal into data representing a displayable sub-picture, and a microcomputer controlling the first video processor and the second video processor, so that at least one of the main picture data and the sub-picture data is partially outputted in accordance with a shape of the sub-picture.

The microcomputer advantageously provides a user with a sub-picture setting menu for selecting and modifying the sub-picture shape. Preferably, the sub-picture setting menu includes a plurality of selectable sample shapes, and/or a selectable option for creating and adding new sub-picture sample shapes based on the user's preference.

Suitably, the microcomputer either controls the first video processor, so as to output a portion of the main picture data corresponding to an area of the screen excluding the sub-picture shape selected or modified by the user, or controls the second video processor, so as to output a portion of the sub-picture data corresponding to the sub-picture shape selected or modified by the user.

It is preferred that the microcomputer displays the sub-picture on a screen depending upon a pixel information corresponding to the sub-picture shape selected or modified by the user.

In another aspect of the present invention, a method for performing PIP in a display device includes selecting or modifying a sub-picture shape by a user, converting a first video signal and a second video signal into data representing a main picture and data representing a sub-picture, respectively, outputting at least one of the main picture data and the sub-picture data partially outputted depending upon the sub-picture shape selected or modified by the user, and combining the outputted main picture data and sub-picture data.

Preferably, the user selects or modifies the sub-picture shape by using a sub-picture setting menu being displayed on a screen. The user may either selects any one a plurality of sub-picture sample shapes included in the sub-picture setting menu, or may modify a pixel information of the sub-picture from the sub-picture setting menu, so as to modify a shape of the sub-picture.

The step of outputting the main picture data and the sub-picture data advantageously comprises one of selectively outputting a portion of the main picture data corresponding to an area of the screen excluding the selected or modified sub-picture shape, and selectively outputting a portion of the sub-picture data corresponding to the selected or modified sub-picture shape.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a block diagram of an apparatus for performing PIP in a display device according to the present invention;

FIG. 2 illustrates a block diagram showing a detailed structure of the display device according to the present invention;

FIG. 3 illustrates a flow chart of a method for performing PIP in the display device according to the present invention;

FIG. 4 illustrates a sub-picture setting menu according to an embodiment of the present invention;

FIG. 5 illustrates a sub-picture according to a first embodiment of the present invention; and

FIG. 6 illustrates the sub-picture according to a second embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

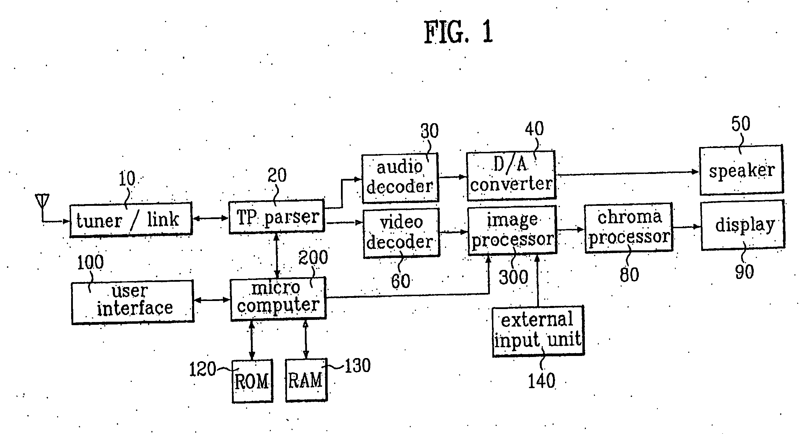

FIG. 1 illustrates a block diagram of an apparatus for performing a sub-picture (PIP) in a display device according to the present invention.

Referring to FIG. 1, among a plurality of broadcast signals, a tuner 10 selectively receives a broadcast signal selected by a user through an antenna. Then, a TP parser 20 divides the broadcast signal received from the tuner into a video signal and an audio signal. The divided audio signal and video signal are then inputted to a video decoder 60 and an audio decoder 30, respectively. The audio decoder 30 decodes the audio signal outputted from the TP parser 20 and transmits the decoded audio signal to a digital/analog (D/A) converter 40. Then, the D/A converter 40 converts the decoded audio signal so that the converted decoded audio signal is outputted from a speaker 50 as a sound.

The video decoder 60 decodes the video signal outputted from the TP parser 20 and supplies the decoded video signal to a video processor 300. Herein, the decoded video signal includes a first video signal for displaying a main picture, and a second video signal for displaying a sub-picture. In order to display a main picture and a sub-picture on a display 90 depending upon a user command inputted through an interface, the video processor 300 converts the first video signal into a displayable main picture data and converts the second video signal into a displayable sub-picture data. The video processor 300 then combines the main picture data and the sub-picture data. In addition, the video processor 300 can modify the shape and size of the sub-picture overlapping the main picture in accordance with the user command. Moreover, the video processor 300 converts video signals inputted from an external input unit 140 into displayable signals.

A chroma processor 80 processes the video signal including one of a message and an icon outputted from the video processor 300, so that a message or an icon can be displayed on the display 90.

A microcomputer 200 receives a user command inputted from the user interface 100. The microcomputer 200 then controls the video processor 300, so that the shape and size of the sub-picture can be modified in accordance with the user command. In addition, the microcomputer 200 outputs corresponding control signals depending upon image settings and related history and information stored in a ROM 120 and a RAM 130.

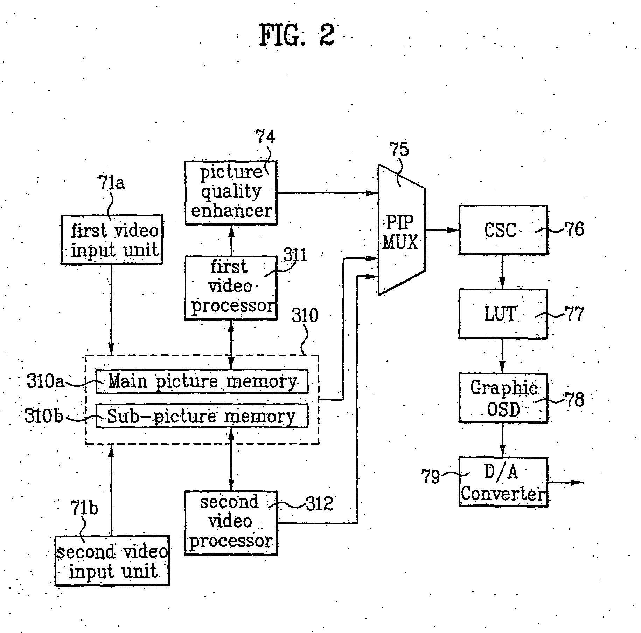

FIG. 2 illustrates a block diagram showing a detailed structure of the display device according to the present invention.

Referring to FIG. 2, a first video input unit 71a receives the first video signal from the video decoder 60, and a second video input unit 71b receives the second video signal from the video decoder 60. The first and second video signals inputted to the first and second video input units 71a and 71b are divisionally stored in a memory 310. More specifically, for example, the first video signal is stored in a main picture memory 310a, and the second video signal is stored in a sub-picture memory 310b.

A first video processor 311 reads the first video signal stored in the memory 310 and then converts the first video signal into a displayable main picture data. The main picture data converted at the first video processor 311 is then inputted to a picture quality enhancer 74 in order to enhance the picture quality of the converted main picture data. Additionally, a second video processor 312 converts the second video signal, stored in the memory 310, into a displayable sub-picture data. The first and second video processors 311 and 312 not only receives the first and second video signals stored in the memory 310, but can also directly receive the first and second video signals from the first and second video input units 71a and 71b.

A PIP Multiplexer 75 receives the main picture data from the picture quality enhancer 74 and receives the sub-picture data from the second video processor 312. The PIP MUX 75 then combines the main picture data and the sub-picture data in order to display the sub-picture on the main picture.

A color space converter (CSC) 76 converts the combined data from the PIP MUX 75 into either Y, Pb, and Pr signals or R, G, and B signals. A look-up table (LUT) 77 controls and converts the Y, Pb, and Pr signals or R, G, and B signals based on a pre-determined screen information. The LUT 77 then supplies the outputted Y, Pb, and Pr signals or R, G, and B signals to the chroma processor 80 through a graphic on screen display (OSD) 78 and a D/A converter 79.

The method for processing a sub-picture by using the device for processing a sub-picture in the display device according to the present invention will now be described in detail.

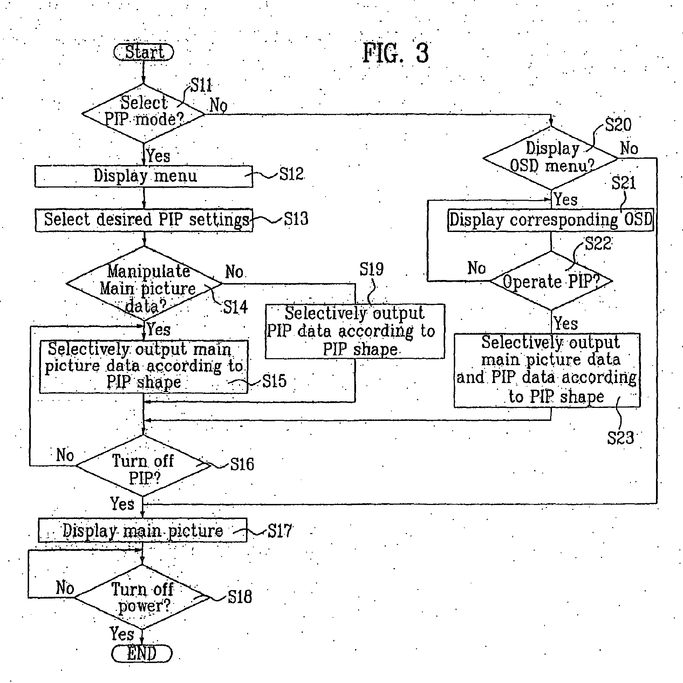

FIG. 3 illustrates a flow chart of a method for processing the sub-picture in the display device according to the present invention.

Referring to FIG. 3, the microcomputer 200 determines whether the user desires a sub-picture to be displayed on a predetermined area of the main picture. In other words, the microcomputer 200 determines whether the user selects a sub-picture mode (S11).

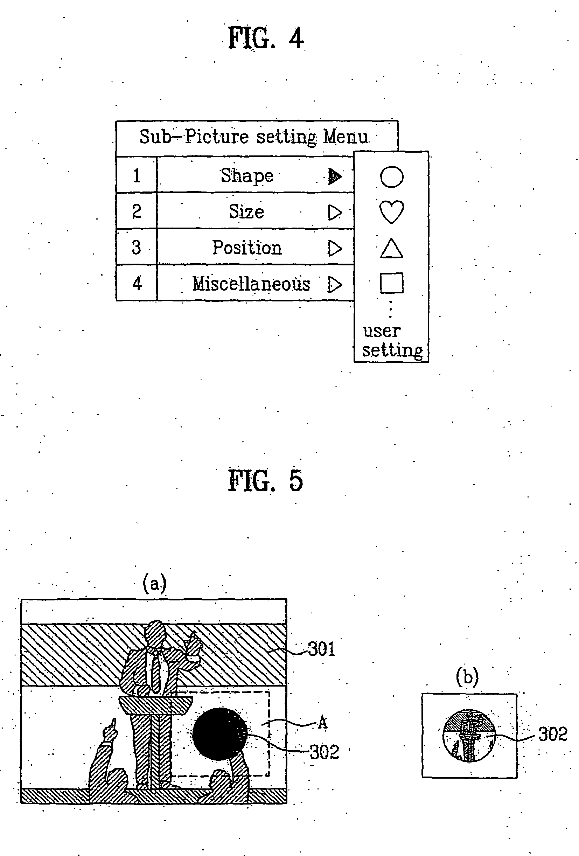

Depending upon the result of step 11, when the microcomputer 200 determines that the user has selected the sub-picture mode, then the microcomputer 200 displays a "Sub-picture setting menu" on the display 90 (S12), as shown in FIG. 4. The Sub-picture setting menu includes a plurality of sub-picture sample shapes, which the user can select according to his or her liking. The menu also includes a "User Setting" selectable option allowing the user to modify the shape of the sub-picture. For example, the sub-picture samplers include the shapes of a circle, a heart, a triangle, a square or rectangle, and so on. The user can select any one of the shapes by using a remote controller. In addition, when the user selects the User Setting option, a window allowing the user to modify and create a desired sub-picture shape is supplied. If the user desires a diamond (or lozenge) shape sub-picture, the user selects the fourth sub-picture sample shape (*i.e.,* a square or rectangle) and uses the remote controller to replace the positions of each angular point, so as to modify the square or rectangle into a diamond (or lozenge) shape. Herein, each of the angular points of the square or rectangle can be replaced by modifying the corresponding pixel information (*i.e.,* the pixel address).

The above-described diamond shaped sub-picture created according to the user's settings can be added as a sub-picture sample shape. When the user desires to add the newly formed sub-picture sample shape in the Sub-picture setting menu, the microcomputer 200 upgrades the Sub-picture setting menu and stores the upgraded menu in either the RAM 130 or the memory 310.

The Sub-picture setting menu includes buttons for controlling the size of the sub-picture. For example, when the user selects the "Size" selectable option in the Sub-picture setting menu, as shown in FIG. 4, an "Enlarge" button and a "Reduce" button are displayed on the screen. When the user selects the Enlarge button by using the remote controller, the size of the sub-picture is increased. Conversely, when the user selects the Reduce button, the size of the sub-picture is decreased.

The Sub-picture setting menu also includes a plurality of buttons for controlling the position of the sub-picture. For example, when the user selects the "Position" selectable option in the Sub-picture setting menu, as shown in FIG. 4, an "Up" button, a "Down"- button, a "Left" button, and a "Right" button are displayed. When the user selects either the Up button or the Down button, the position of the sub-picture in the display 90 moves either up or down, respectively. On the other hand, when the user selects either the Left button or the Right button, the displayed sub-picture moves to either the left side or the right side in the display 90.

Furthermore, the Sub-picture setting menu includes a button allowing the user to select the number of sub-pictures to be displayed on the display 90. When the user selects the "Miscellaneous" selectable option on the Sub-picture setting menu, as shown in FIG. 4, a plurality of buttons for selecting and/or controlling the number of displayed sub-pictures, the emphasis of the sub-picture in contrast with the main picture, and so on, are displayed.

When the user selects the shape and the size of the sub-picture (S 13), the microcomputer 200 identifies the display mode in the sub-picture area (S14). The display mode is previously determined by the user. Two types of sub-picture display modes are supplied in the present invention. The display modes include manipulating (or modifying) the main picture data according to the sub-picture shape selected by the user, and manipulating (or modifying) the sub-picture data according to the sub-picture shape selected by the user.

As shown in FIG. 5A, when selecting the mode of manipulating the main picture data, the first video processor 311 transmits the main picture data corresponding to the remaining area of the screen, excluding the circle-shaped sub-picture 302 selected by the user, to the PIP MUX 75, and the second video processor 312 transmits the entire sub-picture data to the PIP MUX 75 (S 15). At this point, the microcomputer 200 controls the first video processor 311 by using the pixel information of the selected sub-picture, so as to selectively supply the main picture data to the PIP MUX 75.

The sub-picture data supplied to the PIP MUX 75 is a data corresponding to a square-shaped sub-picture, however, a circle-shaped sub-picture 302 is displayed on the display 90. The peripheral area (A) of the circle-shaped sub-picture 302 is an area where the sub-picture overlaps the main picture. However, the emphasis of the sub-picture in contrast with the main picture may be controlled, so as to display only the main picture in the area (A).

As shown in FIG. 5B, when selecting the mode of manipulating the sub-picture data, the first video processor 311 supplies the entire main picture data to the PIP MUX 75, and the second video processor 312 supplies only the sub-picture data, corresponding to the circle-shaped sub-picture 302 selected by the user, to the PIP MUX 75 (S19). At this point, the microcomputer 200 controls the second video processor 312 by using the pixel information of the selected sub-picture, so as to selectively supply sub-picture data to the PIP MUX 75. Accordingly, the circle-shaped sub-picture 302 is displayed on the display 90.

Other examples may also be applied in the present invention, apart from the two types described above. For example, when the sub-picture data corresponding to circle-shaped sub-picture 302, selected by the user, and the main picture data corresponding to the remaining picture area excluding the circle-shaped sub-picture 302 is supplied to the PIP MUX 75, the circle-shaped sub-picture 302 is displayed on the display 90. The microcomputer 200 controls the first and second video processors 311 and 312 by using the pixel information of the selected sub-picture, so as to selectively supply the main picture data and the sub-picture data to the PIP MUX 75.

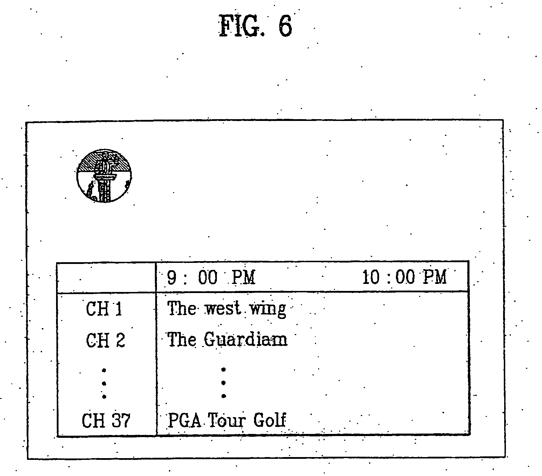

Another example will be described with reference to FIG. 6. When an OSD screen is displayed (S20), the OSD data corresponding to the remaining area of the screen excluding the circle-shaped sub-picture 302 area and the sub-picture data corresponding to the circle-shaped sub-picture 302 is supplied to the PIP MUX 75, thereby displaying the circle-shaped sub-picture 302 on the OSD screen (S21 to S23).

The PIP MUX 75 receives the main picture data and the sub-picture data from the first video processor 311 and the second video processor 312, respectively, combines the main picture data and the sub-picture data, and, then, outputs the combined data. At this point, the PIP MUX 75 controls the emphasis of the sub-picture in contrast with the main picture in accordance with the control of the microcomputer 200.

Accordingly, the apparatus and method for performing PIP in the display device according to the present invention provides a sub-picture setting menu for modifying the sub-picture (*e.g*., PIP), so as to adjust not only the shape but also the size and position of the sub-picture. Therefore, the user can select and modify the sub-picture according to his or her preference.

In summary, the subject matter described in the following sub-paragraphs that are numbered for reference is part of the disclosure of the present application, each of which can be claimed in the present application, and in one or more future divisional applications there from:

An apparatus for performing a picture-in-picture (PIP) in a display device, comprising: a first video processor converting a first video signal into data representing a displayable main picture; a second video processor converting a second video signal into data representing a displayable sub-picture; and a microcomputer controlling the first video processor and the second video processor, so that at least one of the main picture data and the sub-picture data is partially outputted in accordance with a shape of the sub-picture.

The apparatus according to sub-paragraph [0052], wherein the microcomputer provides a user with a sub-picture setting menu for selecting and modifying the sub-picture shape.

The apparatus according to sub-paragraph [0053], wherein the sub-picture setting menu includes a plurality of selectable sample shapes.

The apparatus according to sub-paragraph [0054], wherein the sub-picture setting menu further includes a selectable option for creating and adding new sub-picture sample shapes based on the user's preference.

The apparatus according to sub-paragraph [0053], wherein the sub-picture setting menu includes a plurality of selectable options for controlling a size and a position of the sub-picture.

The apparatus according to sub-paragraph [0052], wherein the microcomputer displays the sub-picture on a screen depending upon a pixel information corresponding to the sub-picture shape selected or modified by the user.

The apparatus according to sub-paragraph [0052], wherein the microcomputer controls the first video processor, so as to output a portion of the main picture data corresponding to an area of the screen excluding the sub-picture shape selected or modified by the user.

The apparatus according to sub-paragraph [0052], wherein the microcomputer controls the second video processor, so as to output a portion of the sub-picture data corresponding to the sub-picture shape selected or modified by the user.

The apparatus according to sub-paragraph [0052], further comprising a multiplexer combining the main picture data and the sub-picture data and controlling an emphasis ration of the sub-picture to the main picture in accordance with a control of the microcomputer.

The apparatus according to sub-paragraph [0052], further comprising: a first memory storing the first video signal; and a second memory storing the second video signal.

A method for performing a picture-in-picture (PIP) in a display device, comprising: selecting or modifying a sub-picture shape by a user; converting a first video signal and a second video signal into data representing a main picture and data representing a sub-picture, respectively; outputting at least one of the main picture data and the sub-picture data partially depending upon the sub-picture shape selected or modified by the user; and combining the outputted main picture data and sub-picture data.

The method according to sub-paragraph [0062], wherein the user selects or modifies the sub-picture shape by using a sub-picture setting menu being displayed on a screen.

The method according to sub-paragraph [0063], wherein the user selects any one a plurality of sub-picture sample shapes included in the sub-picture setting menu.

The method according to sub-paragraph [0063], wherein the user modifies a pixel information of the sub-picture from the sub-picture setting menu, so as to modify a shape of the sub-picture.

The method according to sub-paragraph [0063], wherein the sub-picture setting menu includes a plurality of selectable options for controlling a size and a position of the sub-picture.

The method of sub-paragraph [0062], wherein the outputting the main picture data and the sub-picture data comprises selectively outputting a portion of the main picture data corresponding to an area of the screen excluding the selected or modified sub-picture shape.

The method of sub-paragraph [0062], wherein the outputting the main picture data and the sub-picture data comprises selectively outputting a portion of the sub-picture data corresponding to the selected or modified sub-picture shape.

The method according to sub-paragraph [0062], wherein the outputting the main picture data and the sub-picture data comprises selectively outputting a portion of the main picture data corresponding to an area of the screen excluding the selected or modified sub-picture shape and selectively outputting a portion of the sub-picture data corresponding to the selected or modified sub-picture shape, simultaneously.

The method according to sub-paragraph [0062], wherein the main picture data is an on screen display data.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. An apparatus for performing a picture-in-picture (PIP) function in a display device, the apparatus comprising:
a first processor (311) converting a first signal into data representing a displayable main picture;
a second processor (312) converting a second signal into data representing at least one displayable sub-picture; and
a microcomputer (200) controlling the first processor (311) and the second processor (312), so that at least one of the main picture data and the sub-picture data is outputted in accordance with a position of the displayed sub-picture as selected or modified by a user;
**characterized in that**
the microcomputer (200) is adapted to control the second processor (312), so as to output the sub-picture data corresponding to the sub-picture position selected or modified by the user; and
the microcomputer (200) is adapted to control the first processor (311), so as to output a portion of the main picture data corresponding to an area of a screen excluding a portion of the main picture data corresponding to the sub-picture position selected or modified by the user.

2. The apparatus according to claim 1, wherein the microcomputer (200) provides a user with a sub-picture setting menu for selecting and modifying the sub-picture position.

3. The apparatus according to claim 2, wherein the sub-picture setting menu includes an option for selecting one of a button to move the sub-picture position up, a button to move the sub-picture position down, a button to move the sub-picture position to a left side of the screen, and a button to move the sub-picture position to a right side of the screen.

4. The apparatus according to claim 2, wherein the sub-picture setting menu includes a plurality of selectable sample shapes and a selectable option for creating and adding new sub-picture sample shapes based on user preference.

5. The apparatus according to claim 2, wherein the sub-picture setting menu includes a selectable option for controlling a size of the at least one sub-picture.

6. The apparatus according to claim 2, wherein the sub-picture setting menu includes an option for selecting one of a button to increase sub-picture size and a button to decrease sub-picture size.

7. The apparatus according to claim 2, wherein the sub-picture setting menu includes an option for selecting one of a plurality of buttons to set a number of displayed sub-pictures.

8. A method for performing a picture-in-picture (PIP) function in a display device, the method comprising:
(S13) selecting or modifying a sub-picture position;
converting a first signal and a second signal into data representing a main picture and data representing at least one sub-picture, respectively; and
(S15, S19, S23) outputting at least one of the main picture data and the sub-picture data depending upon the sub-picture position selected or modified by the user; and
**characterized in that**
the sub-picture position is selected or modified by a user; and
the step of outputting the main picture data and the sub-picture data comprises selectively outputting a portion of the main picture data corresponding to an area of a screen excluding a portion of the main picture data corresponding to the selected or modified sub-picture position.

9. The method according to claim 8, wherein the user selects or modifies the sub-picture position by using a sub-picture setting menu being displayed on the screen.

10. The method according to claim 9, further comprising:
selecting from the displayed sub-picture setting menu one of a button to move the sub-picture position up, a button to move the sub-picture position down, a button to move the sub-picture position to a left side of the screen, and a button to move the sub-picture position to a right side of the screen.

11. The method according to claim 9, further comprising:
selecting from the displayed sub-picture setting menu any one of a plurality of sub-picture sample shapes or a selectable option for creating and adding new sub-picture sample shapes based on user preference.

12. The method according to claim 9, wherein the sub-picture setting menu includes a selectable option for controlling a size of the at least one sub-picture.

13. The method according to claim 9, further comprising:
selecting from the displayed sub-picture setting menu either one of a button to increase sub-picture size and a button to decrease sub-picture size.

14. The method according to claim 9, further comprising:
selecting from the displayed sub-picture setting menu one of a plurality of buttons to set a number of displayed sub-pictures.

15. The method according to claim 8, wherein the outputting the main picture data and the sub-picture data comprises selectively outputting a portion of the main picture data corresponding to an area of the screen excluding the selected or modified sub-picture position and selectively outputting a portion of the sub-picture data corresponding to the selected or modified sub-picture position, simultaneously.

## Patentansprüche

1. Gerät zum Ausführen einer Bild-in-Bild-(PIP) Funktion in einer Anzeigevorrichtung, wobei das Gerät folgendes umfasst:
einen ersten Prozessor (311), der ein erstes Signal in Daten umwandelt, die ein anzeigbares Hauptbild darstellen;
einen zweiten Prozessor (312), der ein zweites Signal in Daten umwandelt, die mindestens ein anzeigbares Nebenbild darstellen;
einen Mikrocomputer (200), der den ersten Prozessor (311) und den zweiten Prozessor (312) derart steuert, dass mindestens die Hauptbilddaten oder die Nebenbilddaten gemäß einer Lage des angezeigten Nebenbildes ausgegeben werden, wie sie durch einen Benutzer ausgewählt oder geändert wurde;
**dadurch gekennzeichnet, dass**
der Mikrocomputer (200) dazu ausgebildet ist, den zweiten Prozessor (312) derart zu steuern, dass die Nebenbilddaten ausgegeben werden, die der Lage des Nebenbildes entsprechen, die durch den Benutzer ausgewählt oder geändert wurde; und
der Mikrocomputer (200) dazu ausgebildet ist, den ersten Prozessor (311) derart zu steuern, dass ein Teil der Hauptbilddaten ausgegeben wird, der einem Bereich eines Bildschirms entspricht, wobei ein Teil der Hauptbilddaten ausgeschlossen ist, welcher der Lage des Nebenbildes entspricht, die durch den Benutzer ausgewählt oder geändert wurde.

2. Gerät gemäß Anspruch 1, wobei der Mikrocomputer (200) einem Benutzer ein Nebenbild-Einstellungsmenü zum Auswählen und Ändern der Lage des Nebenbildes bereitstellt.

3. Gerät gemäß Anspruch 2, wobei das Nebenbild-Einstellungsmenü eine Option für das Auswählen einer der folgenden Schaltflächen umfasst: eine Schaltfläche, um die Lage des Nebenbildes nach oben zu bewegen; eine Schaltfläche, um die Lage des Nebenbildes nach unten zu bewegen; eine Schaltfläche, um die Lage des Nebenbildes zu einer linken Seite des Bildschirms hin zu bewegen; und eine Schaltfläche, um die Lage des Nebenbildes zu einer rechten Seite des Bildschirms hin zu bewegen.

4. Gerät gemäß Anspruch 2, wobei das Nebenbild-Einstellungsmenü mehrere auswählbare Beispielformen und eine auswählbare Option zum Erstellen und Hinzufügen neuer Nebenbild-Beispielformen basierend auf der Präferenz des Benutzers umfasst.

5. Gerät gemäß Anspruch 2, wobei das Nebenbild-Einstellungsmenü eine auswählbare Option zum Steuern einer Größe des mindestens einen Nebenbildes umfasst.

6. Gerät gemäß Anspruch 2, wobei das Nebenbild-Einstellungsmenü eine Option zum Auswählen einer der folgenden Schaltflächen umfasst: eine Schaltfläche zum Vergrößern der Nebenbildgröße und eine Schaltfläche zum Verkleinern der Nebenbildgröße.

7. Gerät gemäß Anspruch 2, wobei das Nebenbild-Einstellungsmenü eine Option zum Auswählen einer von mehreren Schaltflächen umfasst, um eine Zahl der angezeigten Nebenbilder festzulegen.

8. Verfahren zum Ausführen einer Bild-in-Bild- (PIP) Funktion in einer Anzeigevorrichtung, wobei das Verfahren folgende Schritte umfasst:
(S13) Auswählen oder Ändern einer Lage des Nebenbildes;
Umwandeln eines ersten Signals und eines zweiten Signals jeweils in Daten, die ein Hauptbild darstellen, und in Daten, die mindestens ein Nebenbild darstellen; und
(S15, S19, S23) Ausgeben mindestens der Hauptbilddaten oder der Nebenbilddaten in Abhängigkeit von der Lage des Nebenbildes, die durch den Benutzer ausgewählt oder geändert wurde; und
**dadurch gekennzeichnet, dass**
die Lage des Nebenbilds durch einen Benutzer ausgewählt oder geändert wird; und
der Schritt zum Ausgeben der Hauptbilddaten und der Nebenbilddaten das wahlweise Ausgeben eines Teils der Hauptbilddaten umfasst, der einem Bereich eines Bildschirms entspricht, wobei ein Teil der Hauptbilddaten ausgeschlossen ist, welcher der ausgewählten oder geänderten Lage des Nebenbildes entspricht.

9. Verfahren gemäß Anspruch 8, wobei der Benutzer die Lage des Nebenbildes auswählt oder ändert, indem er ein Nebenbild-Einstellungsmenü verwendet, das auf dem Bildschirm angezeigt wird.

10. Verfahren gemäß Anspruch 9, ferner umfassend:
Auswählen einer der folgenden Schaltflächen aus dem angezeigten Nebenbild-Einstellungsmenü: eine Schaltfläche, um die Lage des Nebenbildes nach oben zu bewegen; eine Schaltfläche, um die Lage des Nebenbildes nach unten zu bewegen; eine Schaltfläche, um die Lage des Nebenbildes zu einer linken Seite des Bildschirms hin zu bewegen; und eine Schaltfläche, um die Lage des Nebenbildes zu einer rechten Seite des Bildschirms hin zu bewegen.

11. Verfahren gemäß Anspruch 9, ferner umfassend:
Auswählen irgendeiner von mehreren Nebenbild-Beispielformen aus dem angezeigten Nebenbild-Einstellungsmenü oder einer auswählbaren Option zum Erstellen und Hinzufügen neuer Nebenbild-Beispielformen basierend auf der Präferenz des Benutzers.

12. Verfahren gemäß Anspruch 9, wobei das Nebenbild-Einstellungsmenü eine auswählbare Option zum Steuern einer Größe des mindestens einen Nebenbildes umfasst.

13. Verfahren gemäß Anspruch 9, ferner umfassend:
Auswählen entweder einer Schaltfläche zum Vergrößern der Nebenbildgröße oder einer Schaltfläche zum Verkleinern der Nebenbildgröße aus dem angezeigten Nebenbild-Einstellungsmenü.

14. Verfahren gemäß Anspruch 9, ferner umfassend:
Auswählen einer von mehreren Schaltflächen aus dem angezeigten Nebenbild-Einstellungsmenü, um eine Zahl der angezeigten Nebenbilder festzulegen.

15. Verfahren nach Anspruch 8, wobei das Ausgeben der Hauptbilddaten und der Nebenbilddaten umfasst:
wahlweises Ausgeben eines Teils der Hauptbilddaten, die einem Bereich des Bildschirms entsprechen, wobei die ausgewählte oder geänderte Lage des Nebenbildes ausgeschlossen ist, und wahlweises Ausgeben eines Teils der Nebenbilddaten entsprechend der ausgewählten oder geänderten Lage des Nebenbildes.

## Revendications

1. Appareil pour réaliser une fonctionnalité d'image-dans-une-image (PIP) dans un dispositif d'affichage, l'appareil comprenant :
un premier processeur (311) convertissant un premier signal en données représentant une image principale affichable ;
un second processeur (312) convertissant un second signal en données représentant au moins une sous-image affichable ; et
un microordinateur (200) commandant le premier processeur (311) et le second processeur (312), de sorte qu'au moins une des données d'image principale et des données de sous-image est fournie selon une position de la sous-image affichée comme sélectionnée ou modifiée par un utilisateur ;
**caractérisé en ce que**
le microordinateur (200) est adapté pour commander le second processeur (312), afin de sortir les données de sous-image correspondant à la position de sous-image sélectionnée ou modifiée par l'utilisateur ; et
le microordinateur (200) est adapté pour commander le premier processeur (311), afin de sortir une partie des données d'image principale correspondant à une zone d'un écran excluant une partie des données d'image principale correspondant à la position de sous-image sélectionnée et modifiée par l'utilisateur.

2. Appareil selon la revendication 1, dans lequel le microordinateur (200) fournit à un utilisateur un menu de réglage de sous-image pour sélectionner et modifier la position de sous-image.

3. Appareil selon la revendication 2, dans lequel le menu de réglage de sous-image comprend une option pour sélectionner un d'un bouton pour déplacer la position de sous-image vers le haut, d'un bouton pour déplacer la position de sous-image vers le bas, d'un bouton pour déplacer la position de sous-image vers la gauche de l'écran, et d'un bouton pour déplacer la position de sous-image vers la droite de l'écran.

4. Appareil selon la revendication 2, dans lequel le menu de réglage de sous-image comprend une pluralité de formes d'échantillon sélectionnables et une option sélectionnable pour créer et ajouter de nouvelles formes d'échantillon de sous-image sur la base de préférence d'utilisateur.

5. Appareil selon la revendication 2, dans lequel le menu de réglage de sous-image comprend une option sélectionnable pour commander une taille d'au moins une sous-image.

6. Appareil selon la revendication 2, dans lequel le menu de réglage de sous-image comprend une option pour sélectionner un d'un bouton pour augmenter une taille de sous-image et d'un bouton pour diminuer une taille de sous-image.

7. Appareil selon la revendication 2, dans lequel le menu de réglage de sous-image comprend une option pour sélectionner un d'une pluralité de boutons pour régler un numéro de sous-images affichées.

8. Procédé pour réaliser une fonctionnalité d'image-dans-une-image (PIP) dans un dispositif d'affichage, le procédé comprenant :
(S13) la sélection ou la modification d'une position de sous-image ;
la conversion d'un premier signal et d'un second signal en données représentant une image principale et données représentant au moins une sous-image, respectivement ; et
(S15, S19, S23) la fourniture d'au moins une des données d'image principale et des données de sous-image en fonction de la position de sous-image sélectionnée ou modifiée par l'utilisateur ; et
**caractérisé en ce que**
la position de sous-image est sélectionnée ou modifiée par un utilisateur ; et
l'étape de sortie des données d'image principale et des données de sous-image comprend sélectivement la fourniture d'une partie des données d'image principale correspondant à une zone d'un écran excluant une partie des données d'image principale correspondant à la position de sous-image sélectionnée ou modifiée.

9. Procédé selon la revendication 8, dans lequel l'utilisateur sélectionne ou modifie la position de sous-image en utilisant un menu de réglage de sous-image étant affiché sur l'écran.

10. Procédé selon la revendication 9, comprenant en outre :
la sélection à partir du menu de réglage de sous-image affiché d'un d'un bouton pour déplacer la position de sous-image vers le haut, d'un bouton pour déplacer la position de sous-image vers le bas, d'un bouton pour déplacer la position de sous-image vers la gauche de l'écran, et d'un bouton pour déplacer la position de sous-image vers la droite de l'écran.

11. Procédé selon la revendication 9, comprenant en outre :
la sélection à partir du menu de réglage de sous-image affiché d'une pluralité de formes d'échantillon de sous-image ou d'une option sélectionnable pour créer et ajouter de nouvelles formes d'échantillon de sous-image sur la base de préférence d'utilisateur.

12. Procédé selon la revendication 9, dans lequel le menu de réglage de sous-image comprend une option sélectionnable pour commander une taille d'au moins une sous-image.

13. Procédé selon la revendication 9, comprenant en outre :
la sélection à partir du menu de réglage de sous-image affiché de l'un ou l'autre d'un bouton pour augmenter la taille de sous-image et d'un bouton pour diminuer la taille de sous-image.

14. Procédé selon la revendication 9, comprenant en outre :
la sélection à partir du menu de réglage de sous-image affiché d'un d'une pluralité de boutons pour régler un numéro de sous-images affichées.

15. Procédé selon la revendication 8, dans lequel la sortie des données d'image principale et des données de sous-image comprend la fourniture sélectivement d'une partie des données d'image principale correspondant à une zone de l'écran excluant la position de sous-image sélectionnée ou modifiée et la fourniture sélectivement d'une partie des données de sous-image correspondant à la position de sous-image sélectionnée ou modifiée, simultanément.
